Europäisches Patentamt

European Patent Office

Office européen des brevets

(19)

(11) Veröffentlichungsnummer: **0 463 489 A2**

# (12) EUROPÄISCHE PATENTANMELDUNG

(21) Anmeldenummer: **91109690.7**

(22) Anmeldetag: **13.06.91**

(51) Int. Cl.5: **G05D 27/02, B23K 9/10**

(30) Priorität: **25.06.90 DE 4020143**

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **MESSER LINCOLN GMBH**
**Lärchenstrasse 137**
**W-6230 Frankfurt/Main 83(DE)**

(72) Erfinder: **Ems, Herbert**
**Schlossstrasse 2**
**W-6093 Flörsheim(DE)**

(74) Vertreter: **Roesner, Werner**
**Geierfeld 45**
**W-6232 Bad Soden-Altenhain(DE)**

(54) **Schweissstromquelle, insbesondere Lichtbogen-Schweissstromquelle, mit Zusatsgeäten.**

(57) Die Erfindung betrifft eine Schweißstromquelle mit Zusatzaggregaten, wie Brennerhöhenverstellungen, Drahtförder-Einrichtung, Gasmengenregelungen, Antrieben, Sensoren und dergleichen, die über Leitungen miteinander verbunden sind.

Um die Signalverarbeitung bei Schweißstromquellen zu vereinfachen, wird gemäß der Erfindung vorgeschlagen, daß die Signale der Datenübertragung zur Steuerung und/oder Regelung und/oder Datenerfassung der Zusatzaggregate über Leitungen erfolgt, die ein lokales Netzwerk bilden, das aus Ring-, Stern- oder Bus-Systemen oder als eine Mischlösung aus den Systemen gebildet ist.

Schweißstromquelle mit dezentraler Intelligenz am Feldbus

Feldbus, serielle Signalübertragung

Schweißstromquelle — Brenner Höhenverstellung — Drahtvorschub — Dreheinheit — Zusatzaggregate

Die Erfindung betrifft eine Schweißstromquelle, insbesondere Lichtbogen-Schweißstromquelle, mit Zusatzaggregaten nach dem Oberbegriff des Anspruches 1.

Bei solchen Schweißstromquellen mit digitaler Steuerung werden die Signale für externe Zusatzaggregate, wie Schweißbrenner, Höhenverstellung, Drahtfördereinrichtung, Gasmengenregelung, Antriebe, Sensoren und dergleichen über parallele Signale angesteuert. Diese Signale müssen ursprünglich über eine Eingangs- und Ausgangskarte zur Verfügung gestellt werden. Sie werden über Relais-Karten verstärkt und dann über Verkabelung zu den Zusatzaggregaten geführt.

Aufgrund der parallelen Signal-Verarbeitung müssen in der Steuerung der Schweißstromquelle entsprechend viele Ein- und Ausgänge bereitgestellt werden. Bei Schweißstromquellen mit vielen Zusatzaggregaten (Zusatzfunktionen) ist die Anzahl der Ein- bzw. Ausgänge oft nicht ausreichend, so daß Sonderlösungen erforderlich werden. Die Kabel und Kabelführungen sind aufwendig und wegen elektromagnetischer Einflüsse oft auch störempfindlich. Die Montagekosten steigen überproportional, da bei äußerster Steuerungsauslastung individuelle Anpassungen und aufwendige Tests notwendig sind.

Der Erfindung liegt daher die Aufgabe zugrunde, die Signalverarbeitung bei Schweißstromquellen, insbesondere bei Lichtbogen-Schweißstromquellen, zu vereinfachen.

Vorteilhafte Weiterbildungen sind in den Unteransprüchen angegeben.

Unter Feldbus soll die Hardware/Software-Kombination verstanden werden, die aus einer seriellen Leitung zur Datenübertragung zwischen einer Schweißstromquellensteuerung und dezentraler Intelligenz bestehend aus einem Mikroprozessor mit Feldbusanschluß, besteht. Die Leitung versorgt die Zusatzaggregate vor Ort mit den Informationen im bidirektionalen seriellen Datenaustausch, der über ein definiertes Protokoll zur zentralen Intelligenz stattfindet.

Die angesprochenen Lichtbogen-Schweißstromquellenprobleme werden durch die Einführung eines Feldbus-Systemes reduziert. In den verarbeitenden Zusatzaggregaten, z. B. Höhenverstellaggregaten, befindet sich dann jeweils ein Mikroprozessor mit Feldbusanschluß (dezentrale Intelligenz). In diesem Rechner werden die Signale aus dem Feldbus aufgelöst, aufbereitet und den Stellelementen zugeführt. Somit wird zu jedem Zusatzaggregat nur eine Leitung mit der Energieversorgung und eine weitere Leitung mit dem Feldbus geführt.

Um zu einer Vereinheitlichung zu kommen, wird in einem Gehäuse der Mikroprozessor mit Feldbusanschluß, Höhenverstellelektronik und der Motorregler integriert. Vorteilhaft kann die Baugröße durch die Ausführung in SMD ( = Surface mounted devices, das bedeutet die Direkt-Montage von miniaturisierten Bauteilen auf die Leiterplatten) oder an sich bekannter Dickschicht - Hybridschaltungstechnik erfolgen.

Erfindungsgemäß wird die Verkabelung in der Schweißstromquelle erheblich einfacher. Die Stromquellensteuerung wird einfacher, da physikalische Ein- und Ausgänge nicht mehr in der Stromquellensteuerung, sondern dezentral bei den Zusatzaggregaten bereitgestellt werden. Dies hat zur Folge, daß stets genausoviele Ein- und Ausgänge vorhanden sind, wie gebraucht werden. Die Elektrokonstruktion vereinfacht sich, da je nach Ausbau der Schweißstromquelle zusätzliche, aber sehr ähnliche Systeme dezentral hinzugefügt werden können. Die Feldbus-Systeme für die dezentralen Zusatzaggregate wiederholen sich im wesentlichen, so daß hier größere Stückzahlen zustande kommen.

Die Schweißstromquelle nach der Erfindung wird durch das System äußerst flexibel, da bei Erweiterung nur zusätzliche lokale Intelligenzen an den Feldbus angeschlossen werden müssen. Die schweißverfahrenstechnischen Abläufe lassen sich standardisieren, in Speichern der Vorortintelligenz ablegen und von der zentralen Steuerung anwählen. Zur Realisierung von nicht standardisierbaren Schweißverfahren und Abläufen können einzelne Signale bis zur zentralen Steuerung durchgeschaltet und dort verarbeitet werden.

Die Voraussetzung für einen vollautomatischen Betrieb wird verbessert, da umfassende Zustandsmeldungen von/zu der lokalen Intelligenz sowie Selbstüberwachung für Endschalter und Antriebe usw. durch die Erfindung erreicht werden.

Das Feldbus-System wird vorteilhaft als Service- und Diagnosehilfe benutzt.

Vorteilhaft können die Signale der Datenübertragung auch über optische Fasern erfolgen. Dabei können generell polymere und Glas-Lichtwellenleiter zugleich in einer Schweißstromquelle und/oder zugleich in einer Faserleitung eingesetzt werden.

Die Fasern können zusätzlich auch separat für Sensorik ein lokales Netzwerk als Ring-, Stern- oder Bussystem (separater Sensorbus) oder als eine Mischlösung aus den genannten Systemen bilden. Die Beobachtung von Prozessen und Maschinenzuständen kann über faseroptische Sensoren erfolgen, wobei die sensorisch eingesetzten Fasern in das Netzwerk integriert werden können (Messung von Geschwindigkeit, Temperaturen und dergleichen). Ebenso kann die Energieübertragung über die Fasern erfolgen, die in der Schweißstromquelle als Wirkenergie oder zum Aufbau von aktiven Sensoren auf Faser-Basis verwendet wird. Durch das Multiprozessorsystem mit getrennten Intelligenzen kann vorteilhaft zeitparalell Rechnerleistung zur Verfügung gestellt werden.

Vorteilhaft ist das System durch Anfügen neuer Netzknoten einfach erweiterbar, wobei aufwendige Selbstdiagnosemeldesysteme einfach aufgebaut werden können. Damit die Maschinen- und Produktionsüberwachung gleichzeitig erfolgen kann, werden Wechselwirkungen zwischen den beiden erkannt.

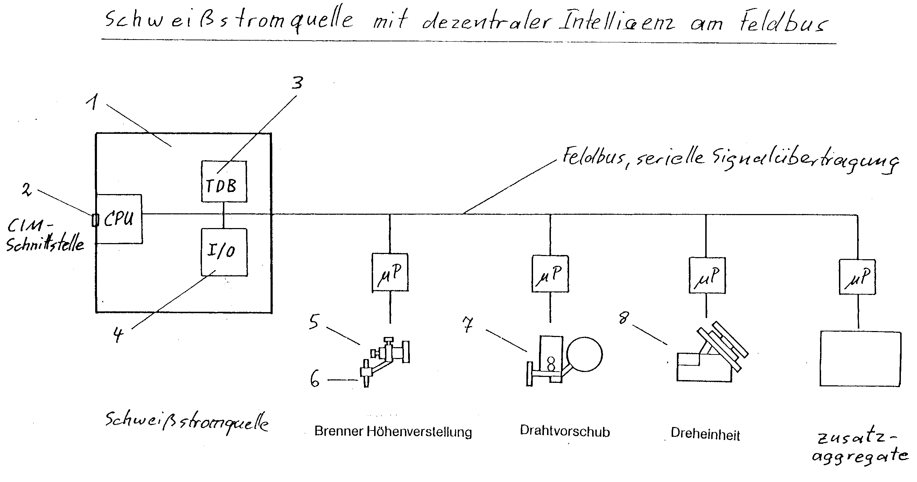

In der Zeichnung ist eine Schweißstromquelle mit dezentraler Intelligenz dargestellt. Die Schweißstromquelle 1 weist eine Mikroprozessor-Steuerung mit CIM-Schnittstelle (Option) 2 auf. In der Steuerung 11 ist eine Technologiedatenbank 13 integriert, in der die für den Schweißvorgang erforderlichen Daten, wie Schweißstrom, Drahtförder- und Drehgeschwindigkeit usw. abgelegt sind. Über Eingangs- und Ausgangskarte 4 ist die Brennerhöhenverstellung 5 für den Schweißbrenner 6 sowie Drahtvorschub 7, Drehtisch 8 und weitere Zusatzaggregate über ein Feldbus-System mit der Schweißstromquelle 1 verbunden. Die Einheiten der integrierten Vorortsensorik mit lokaler Überwachung, Prozessregelung und Automatisierung sind in der Zeichnung mit μP bezeichnet.

Die Erfindung ist besonders vorteilhaft bei Schweißstromquellen/Schweißanlagen zum Lichtbogenschweißen (MIG, MAG, WIG) sowie Plasmaschweißen einsetzbar, kann aber auch vorteilhaft in Einrichtungen zum Widerstandsschweißen, Laser-, Elektronenstrahlschweißen eingesetzt werden.

**Patentansprüche**

1. Schweißstromquelle, insbesondere Lichtbogen-Schweißstromquelle, mit Zusatzaggregaten, wie Brennerhöhenverstellungen, Drahtförder-Einrichtungen, Gasmengenregelungen, Antrieben, Sensoren und dergleichen, die über Leitungen miteinander verbunden sind,
dadurch gekennzeichnet,
daß die Signale der Datenübertragung zur Steuerung und/oder Regelung und/oder Datenerfassung der Zusatzaggregate über Leitungen erfolgt, die ein lokales Netzwerk bilden, das aus Ring-, Stern-, oder Bus-Systemen oder als eine Mischlösung aus den Systemen gebildet ist.

2. Schweißstromquelle nach Anspruch 1,
dadurch gekennzeichnet,
daß den Zusatzaggregaten jeweils ein dezentraler Mikroprozessor mit Feldbusanschluß zugeordnet ist, der über eine serielle Leitung zum Datenaustausch mit der Schweißstromquellensteuerung verbunden ist.

3. Schweißstromquelle nach Anspruch 1 oder 2,
dadurch gekennzeichnet,
daß eine Leitung als Energieversorgung und eine andere Leitung für den bidirektionalen Datenaustausch und gegebenenfalls eine dritte Leitung für den Sicherheitskreis ausgebildet ist.

4. Schweißstromquelle nach einem der Ansprüche 1 bis 3,
dadurch gekennzeichnet,
daß in dem Mikroprozessor die Signale aus dem Feldbus aufgelöst, aufbereitet und den Stellelementen der Zusatzaggregate zugeführt werden.

5. Schweißstromquelle nach einem der Ansprüche 1 bis 4,
dadurch gekennzeichnet,
daß der Mikroprozessor, die Elektronik und der Motorregler des Zusatzaggregates in einem Gehäuse angeordnet ist.

6. Schweißstromquelle nach Anspruch 1,
dadurch gekennzeichnet,
daß die Datenübertragung über polymere oder Glasfasern erfolgt.

7. Schweißstromquelle nach Anspruch 1 oder 6,
dadurch gekennzeichnet,
daß zusätzlich ein lokales Netzwerk aus Ring-, Stern- oder Bussystemen für Sensorik vorhanden ist, das in polymerer oder Glasfasertechnik ausgebildet ist.

8. Schweißstromquelle nach Anspruch 1, 6 oder 7,
dadurch gekennzeichnet,
daß über die polymeren oder Glasfasern die Beobachtung von Prozess- bzw. Maschinenzuständen, wie Geschwindigkeit, Temperatur und dergleichen, erfolgt, wobei diese sensorisch eingesetzten Fasern in das Netzwerk integriert sind.

9. Schweißstromquelle nach Anspruch 1, 6 oder 7,
dadurch gekennzeichnet,
daß die Energieübertragung über die polymeren oder Glasfasern erfolgt und als Wirkenergie oder zum Aufbau von aktiven und/oder passiven Sensoren verwendet wird.

10. Schweißstromquelle nach einem der Ansprüche 1, 6, 7, 8 oder 9,
dadurch gekennzeichnet,
daß polymere Fasern und Glas-Lichtwellenleiter zugleich auf einer Maschine oder zugleich in einer Faserleitung eingesetzt werden.

Schweißstromquelle mit dezentraler Intelligenz am Feldbus

Feldbus, serielle Signalübertragung

TDB

CPU

CIM-Schnittstelle

I/O

$\mu^P$  $\mu^P$  $\mu^P$  $\mu^P$

Schweißstromquelle   Brenner Höhenverstellung   Drahtvorschub   Dreheinheit   zusatz-aggregate

EP 0 463 489 A2